# DEMANDE DE BREVET EUROPEEN

(11) **EP 2 082 798 A1**
(43) Date de publication de la demande: **29.07.2009**
(21) Numéro de dépôt: 09151136.0
(22) Date de dépôt: 22.01.2009
(51) Int. Cl.: B01J 19/30, C02F 3/10

(54) **Procédé de purification biologique de l'eau**

(30) Priorité: 25.01.2008 FR 0850478
(71) Demandeur: Vinci Construction France, 92000 Nanterre (FR)
(72) Inventeur: Robin, Lucie, Christelle, Véronique, 95690 Nesles la Vallee (FR); Nougarede, Frédéric, Pierre, 78360 Montesson (FR)
(74) Mandataire: Blot, Philippe Robert Emile

(57) **Abrégé**

Dans ce procédé de purification biologique, l'eau à traiter est introduite dans un réacteur (2) contenant des éléments de support (3) pour la croissance d'un biofilm, les éléments de support étant maintenus en mouvement dans l'eau dans le réacteur et étant dimensionnés de façon à être conservés dans le réacteur grâce à un filtre permettant de libérer l'eau à partir du réacteur par les ouvertures du filtre , l'élément de support comprenant un corps (18) en forme générale de plaque et présentant une surface protégée (27) contre une collision avec les autres éléments de support

Chaque élément de support (3) comprend une pluralité de protubérances (20) disjointes faisant saillie à partir du corps, les protubérances et le corps définissant ensemble ladite surface protégée (27).

## Description

La présente invention se rapporte à un procédé de purification biologique de l'eau dans lequel l'eau à traiter est introduite dans un réacteur contenant des éléments de support pour la croissance d'un biofilm, les éléments de support étant maintenus en mouvement dans l'eau dans le réacteur et étant dimensionnés de façon à être conservés dans le réacteur grâce à un filtre permettant de libérer l'eau à partir du réacteur par les ouvertures du filtre, l'élément de support comprenant un corps en forme générale de plaque et présentant une surface protégée contre une collision avec les autres éléments de support.

Le document EP-A-1 340 720 décrit un réacteur biologique à lit fluidisé ("moving bed biofilm reactor" en anglais) délimitant un volume de traitement de l'eau usée et contenant des éléments de support pour la croissance d'un biofilm, en mouvement dans l'eau. Le réacteur comprend également un filtre prévu pour retenir les éléments de support à l'intérieur du réacteur tout en permettant l'écoulement de l'eau.

Les éléments de support décrits dans EP-A-1 340 720 ont une forme générale de disque et présentent, à l'intérieur du disque, des passages ou compartiments définissant une surface protégée contre une collision avec les autres éléments de support. Cette surface protégée est avantageuse en ce qu'elle est importante par rapport au volume de l'élément de support. EP-A-1 340 720 décrit en effet une surface protégée supérieure à 1 500 m²/m³ de volume d'élément de support.

Néanmoins, ces éléments de support présentent l'inconvénient que lorsque les éléments de support sont accolés, la surface protégée "active", c'est-à-dire la surface protégée en contact avec l'eau usée, est très fortement réduite, si bien que l'oxygénation de la surface protégée s'en trouve réduite. Les performances du réacteur sont alors moindres.

Un but de l'invention est d'améliorer l'efficacité du procédé de purification biologique de l'eau.

A cet effet, l'invention a pour objet un procédé de purification biologique de l'eau dans lequel l'eau à traiter est introduite dans un réacteur contenant des éléments de support pour la croissance d'un biofilm, les éléments de support étant maintenus en mouvement dans l'eau dans le réacteur et étant dimensionnés de façon à être conservés dans le réacteur grâce un filtre permettant de libérer l'eau à partir du réacteur par les ouvertures du filtre, l'élément de support comprenant un corps en forme générale de plaque et présentant une surface protégée contre une collision avec les autres éléments de support, caractérisé en ce que au moins l'un desdits éléments de support comprend une pluralité de protubérances disjointes faisant saillie à partir du corps, les protubérances et le corps définissant ensemble ladite surface protégée.

Suivant des modes particuliers de réalisation, le procédé présente en outre l'une ou plusieurs des caractéristiques suivantes, prise(s) isolément ou suivant toutes les combinaisons techniquement possibles :
- le corps présente deux surfaces planes opposées à partir desquelles les protubérances font respectivement saillie,
- le corps délimite une paroi continue,
- le corps est plein,
- chaque protubérance définit un sommet opposé au corps et délimitant une surface de collision avec les autres éléments de support, le sommet étant convexe vers l'extérieur de l'élément de support,
- chaque protubérance comprend au moins une encoche de support de biofilm,
- chaque protubérance comprend au moins trois encoches de support parallèles de telle sorte que la protubérance a une section en croix et/ou en étoile, chaque protubérance comprenant de préférence quatre encoches parallèles disposées à 90°,
- chaque protubérance a une hauteur maximale par rapport au corps comprise entre 0,6 mm et 4 mm, de préférence entre 1 mm et 3 mm, de préférence encore entre 1,5 mm et 2,5 mm,
- les protubérances adjacentes sont espacées d'une distance comprise entre 0,4 mm et 9 mm, de préférence comprise entre 0,4 mm et 6 mm, de préférence encore comprise entre 0,4 mm et 3 mm,
- chaque protubérance a une largeur maximale comprise entre 0,5 mm et 3 mm, de préférence entre 1 mm et 2 mm, de préférence encore entre 1 mm et 1,5 mm,
- les deux plus grandes dimensions du corps sont supérieures ou égales à 3 fois la plus petite dimension du corps, de préférence supérieures ou égales à 4 fois la plus petite dimension,
- l'élément de support a une largeur et une longueur inférieures ou égales à 1,5 cm, de préférence comprise entre 1,1 cm et 1,3 cm, de préférence encore environ égale à 1,25 cm,
- les éléments de support ont une surface protégée supérieure ou égale à 600 m²/m³ de volume d'éléments de support, de préférence encore supérieure ou égale à 800 m²/m³ de volume d'éléments de support, de préférence encore supérieure ou égale à 1 000 m²/m³ de volume d'éléments de support, de préférence encore supérieure ou égale à 1 200 m²/m³ de volume d'éléments de support, de préférence encore supérieure ou égale à 1 500 m²/m³ de volume d'éléments de support.

L'invention a également pour objet un réacteur de purification biologique de l'eau délimitant un volume de traitement de l'eau et comprenant :
- une entrée d'eau ;
- une sortie d'eau ;
- un filtre d'occultation partielle de la sortie d'eau, le filtre étant propre à permettre le passage de l'eau ;
- un système de mise en mouvement de l'eau à traiter ; et
- un grand nombre d'éléments de support pour la croissance d'un biofilm, propres à être maintenus dans l'eau et à l'intérieur du réacteur par un dimensionnement adapté du filtre, l'élément de support comprenant un corps en forme générale de plaque et présentant une surface protégée contre une collision avec les autres éléments de support, caractérisé en ce que au moins l'un desdits éléments de support comprend une pluralité de protubérances disjointes faisant saillie à partir du corps, les protubérances et le corps définissant ensemble ladite surface protégée.

Suivant un mode particulier de réalisation, les éléments de support présentent les caractéristiques qui leur sont propres telles que définies ci-dessus.

L'invention sera mieux comprise à la lecture de la description qui va suivre, donnée uniquement à titre d'exemple, et faite en se référant aux dessins annexés, sur lesquelles :
- la figure 1 est une vue schématique en coupe d'un réacteur biologique à lit fluidisé pour la mise en oeuvre d'un procédé selon l'invention ;
- la figure 2 est une vue en perspective de dessus d'un élément de support pour la croissance biologique d'un biofilm, l'élément de support étant contenu dans le réacteur de la figure 1, pour la mise en oeuvre du procédé selon l'invention; et
- la figure 3 est une vue en section de l'élément de support de la figure 2 illustrant deux éléments de support identiques et accolés l'un à l'autre.

Dans le procédé de purification biologique de l'eau selon l'invention, l'eau nécessitant un traitement passe à travers un réacteur à lit fluidisé 2 dans lequel des éléments de support 3 pour la croissance d'un biofilm sont maintenus en mouvement dans l'eau à traiter et gardés à l'intérieur du réacteur 2 grâce à un filtre 4 d'évacuation de l'eau. Le dimensionnement du filtre 4 est en effet adapté pour retenir les éléments de support 3 dans le réacteur 2 tout en permettant l'écoulement de l'eau.

Le filtre 4 a par exemple des ouvertures carrées dont la largeur du côté est comprise entre 6 mm et 11 mm, de préférence entre 6 mm et 9 mm.

Ce type de réacteur 2 est, de façon connue, particulièrement avantageux par rapport à, par exemple, des réacteurs à traitement par boues activées, en ce qu'il permet une concentration de bactéries par mètre cube de réacteur plus importante. Le traitement de l'eau s'en trouve accéléré et/ou le volume nécessaire du réacteur est réduit.

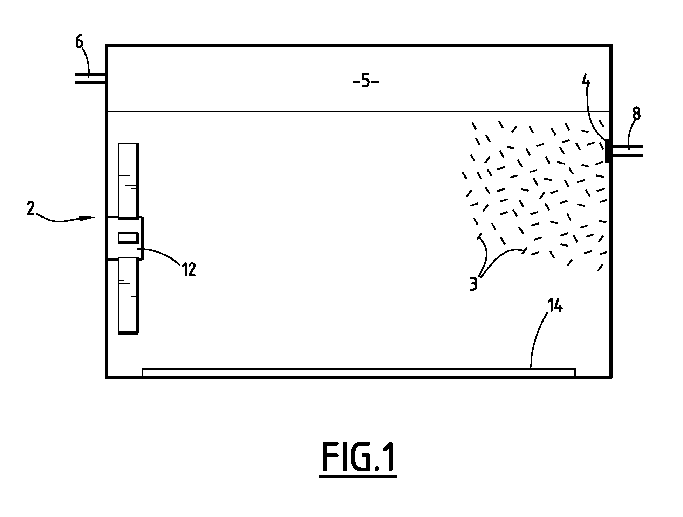

Comme illustré sur la figure 1, le réacteur 2 délimite un volume 5 de traitement de l'eau, et comprend une entrée d'eau 6 et une sortie d'eau 8 occultée par le filtre 4. Sur la figure 1 seule une partie des éléments de support 3 a été représentée pour plus de clarté.

Le réacteur 2 comprend en outre des moyens de brassage 12 de l'eau et des moyens d'aération 14. Les moyens de brassage 12 sont de préférence mécaniques et comprennent de préférence au moins une hélice dont l'axe de rotation est de préférence horizontal.

Le procédé est par exemple anoxie lorsqu'il s'agit de traiter les nitrates ou aérobie lorsqu'il s'agit de traiter le carbone ou l'azote ammoniacal.

Les éléments de support 3 étant identiques, seul l'un d'entre eux est décrit ci-dessous.

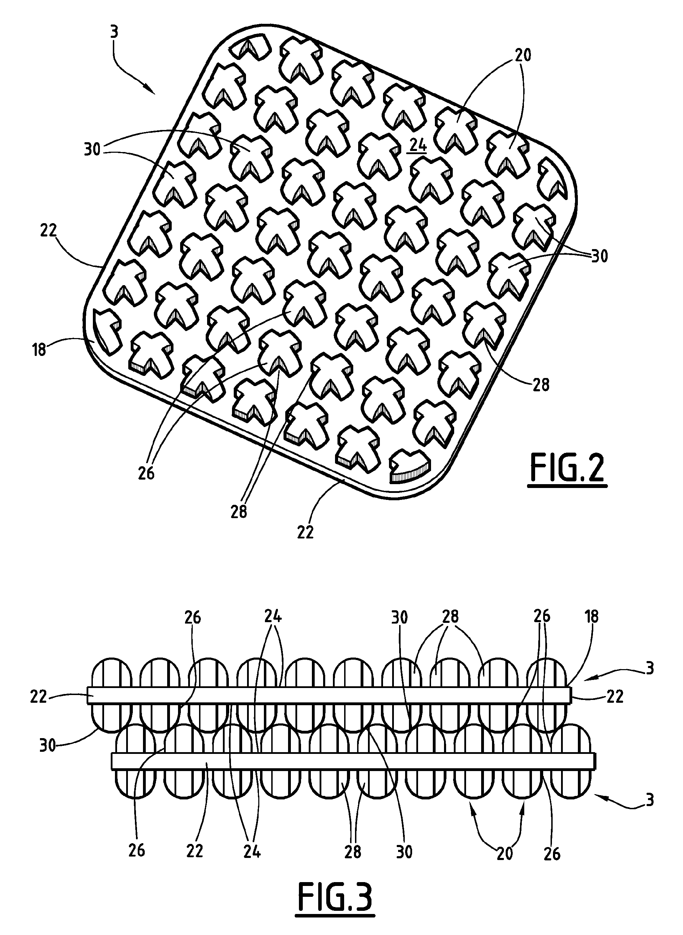

Comme illustré sur la figure 2, chaque élément de support 3 comprend un corps plein 18 en forme de plaque de préférence plane, et un grand nombre de protubérances 20 distinctes et espacées les unes des autres. Les protubérances 20 font saillie vers l'extérieur à partir du corps 18 et de chaque côté de ce dernier.

Le corps 18 a un contour en forme générale de carré (voir figures 2 et 3), et présente un bord périphérique lisse 22, de préférence arrondi et s'étendant de préférence sur l'ensemble de la circonférence du corps 18.

Le corps 18 présente en outre deux surfaces planes opposées 24, jointes par le bord 22. Les protubérances 20 sont réparties sur les deux surfaces 24 et font saillie à partir de celles-ci.

Le corps 18 délimite une paroi continue.

Les deux plus grandes dimensions du corps 18, c'est-à-dire dans l'exemple illustré sa longueur et sa largeur, sont de préférence supérieures ou égales à 3 fois la plus petite dimension du corps 18, c'est-à-dire dans l'exemple illustré son épaisseur, de préférence encore supérieures ou égales à 4 fois.

La largeur et la longueur du corps 18 correspondent à la largeur et à la longueur de l'élément de support 3 et sont, dans l'exemple illustré, égales entre elles. Elles sont de préférence inférieures ou égales à 1,5 cm, de préférence comprises entre 1,1 cm et 1,3 cm, de préférence encore environ égale à 1,25 cm. Néanmoins, elles sont en variante comprises entre 2 cm et 5 cm.

L'épaisseur du corps 18 est de préférence comprise entre 0,4 mm et 1 mm, de préférence encore entre 0,5 mm et 0,7 mm, pour une rigidité importante du corps 18.

Chaque protubérance 20 a de préférence une forme identique.

Comme illustré sur la figure 2, les protubérances 20 ont une forme générale de plot d'axe perpendiculaire à la plaque formée par le corps 18. Chaque plot présente un tronc 25 généralement cylindrique prolongé par un sommet 26 courbé et dont la convexité est orientée vers l'extérieur de l'élément de support 3.

Les protubérances 20 ont une largeur et un espacement adaptés pour empêcher la pénétration d'un autre élément de support 3, et notamment la pénétration d'une protubérance 20 d'un autre élément de support 3 jusqu'à la surface plane 24 située entre des protubérances 20 adjacentes. Les protubérances 20 définissent avec les surfaces planes 24 du corps 18 une surface protégée 27 contre une collision avec les autres éléments de support 3. Cette surface protégée 27 ne peut, lors d'une collision avec un autre élément de support 3, entrer en contact avec cet autre élément de support 3.

Afin d'accroître la surface protégée, chaque protubérance 20 comprend plusieurs encoches 28 de support du biofilm. Dans l'exemple illustré, chaque protubérance 20 présente quatre encoches de support 28 parallèles, s'étendant perpendiculairement à la surface plane 24 correspondante du corps 18, et disposées à 90° les unes des autres. Chaque protubérance 20 a ainsi une section en forme de croix et/ou d'étoile.

Chaque protubérance 20 présente, à son sommet 26, au-delà de la surface protégée 27, une surface de collision 30 avec les autres éléments de support 3.

La surface de collision 30 est de préférence courbe et convexe vers l'extérieur de l'élément de support 3, de manière à favoriser l'éloignement de deux éléments de support 3 accolés.

De préférence encore, la surface de collision 30 est une partie de sphère, notamment afin de réduire les frottements.

Afin de fournir la surface protégée 27, les protubérances 20 ont une largeur maximale de préférence comprise entre 0,5 mm et 3 mm, de préférence comprise entre 1 mm et 2 mm, de préférence encore comprise entre 1 mm et 1,5 mm. Les protubérances 20 adjacentes sont espacées d'une distance de préférence comprise entre 0,4 mm et 9 mm, de préférence comprise entre 0,4 mm et 6 mm, de préférence encore entre 0,4 mm et 3 mm. Les protubérances 20 ont une hauteur maximale mesurée par rapport à la surface plane 24 correspondante du corps 18, c'est-à-dire une longueur mesurée perpendiculairement au corps 18, de préférence comprise entre 0,6 mm et 4 mm, de préférence comprise entre 1 mm et 3 mm, de préférence encore comprise entre 1,5 mm et 2,5 mm.

En outre, les protubérances 20 sont agencées suivant un réseau organisé, les protubérances 20 étant alignées suivant deux directions angulairement espacées.

Les protubérances 20 sont venues de matière avec le corps 18. L'élément de support 3 est de préférence moulé par injection de matière plastique, de préférence en PolyEthylène Haute Densité (PEHD) ou dans un autre matériau de type adapté, pour une rigidité importante.

La surface protégée 27 est de préférence supérieure ou égale à 600 m²/m³ de volume d'éléments de support 3, de préférence encore supérieure ou égale à 800 m²/m³ de volume d'éléments de support 3, de préférence encore supérieure ou égale à 1 000 m²/m³ de volume d'éléments de support 3, de préférence encore supérieure ou égale à 1 200 m²/m³ de volume d'éléments de support 3, de préférence encore supérieure ou égale à 1 500 m²/m³ de volume d'éléments de support 3. Les valeurs ci-dessus correspondent à la surface protégée obtenue en remplissant entièrement un cube d'1 m³ avec des éléments de support 3.

Le taux de remplissage du réacteur est par exemple compris entre 30% et 70%, de préférence entre 35% et 60%. Il correspond au rapport du volume total des éléments de support 3 sur le volume occupé par l'eau et les éléments de support 3, exprimé en pourcentage.

Avec l'invention, les éléments de support 3, même lorsqu'ils sont accolés, permettent à l'eau de venir au contact de la surface protégée 27. En effet, même accolés, les éléments de support 3 permettent un mouvement de l'eau entre chaque protubérance 20, et ainsi entre les éléments de support 3. La surface protégée 27 dite "active" est augmentée. L'oxygénation de la surface protégée 27, favorable au développement de la faune bactériologique, c'est-à-dire du biofilm, est accrue.

En outre, l'invention fournit un procédé dans lequel l'élément de support 3 a une surface protégée importante et active, même pour de petites dimensions de l'élément de support, c'est-à-dire inférieures à 1,5cm.

La surface de collision 30 convexe du sommet 26 des protubérances 20 favorise l'éloignement des éléments de support 3 les uns des autres lorsqu'ils entrent en contact. La courbure de la surface de collision 30 optimise cette fonction d'éloignement tout en réduisant le frottement entre les éléments de support 3, et donc leur usure.

Les encoches de support 28 augmentent la surface protégée 27 et améliorent le mouvement de l'eau entre deux éléments de support 3 accolés.

Les protubérances 20, de part leur géométrie et leur disposition, facilitent le passage de l'eau depuis le sommet des protubérances 20 jusqu'à la plaque 18 et augmentent ainsi la surface protégée 27 "active" des éléments de support 3.

La forme identique des protubérances 20 diminue notamment le coût de fabrication et de conception.

En outre, le corps 18 étant plein, sa rigidité est importante. La rigidité de l'élément de support 3 autorise un brassage mécanique tel que celui réalisé par l'hélice, brassage efficace et économique.

Le choix du matériau de l'élément de support 3 améliore également sa rigidité.

La forme générale aplatie des éléments de support 3 facilite le stockage de ces derniers, améliore la rigidité de l'élément de support 3 et permet l'obtention d'une surface protégée importante.

En variante, chaque protubérance 20 a une forme générale de plot parallélépipédique.

En variante encore, les protubérances 20 ont des orientations et/ou des formes différentes, par exemple de manière à "écrire" une marque.

En variante également, les sommets 26 des protubérances 20 ont une forme plate, de cône ou de pyramide.

En variante, les surfaces opposées 24 du corps 18 ne sont pas planes et sont par exemple ondulées, et le corps 18 présente par exemple des évidements délimitant une surface protégée.

## Revendications

1. Procédé de purification biologique de l'eau dans lequel l'eau à traiter est introduite dans un réacteur (2) contenant des éléments de support (3) pour la croissance d'un biofilm, les éléments de support (3) étant maintenus en mouvement dans l'eau dans le réacteur (2) et étant dimensionnés de façon à être conservés dans le réacteur (2) grâce à un filtre (4) permettant de libérer l'eau à partir du réacteur (2) par les ouvertures du filtre (4), l'élément de support (3) comprenant un corps (18) en forme générale de plaque, au moins l'un desdits éléments de support (3) comprenant une pluralité de protubérances (20) disjointes faisant saillie à partir du corps (18) , **caractérisé en ce que** le corps (18) présente une surface protégée (27) contre une collision avec les autres éléments de support (3), **en ce que** les protubérances (20) et le corps (18) définissent ensemble ladite surface protégée (27), et **en ce que** les protubérances (20) ont une largueur et un espacement adaptés pour empêcher la pénétration d'un autre élément de support (3).

2. Procédé selon la revendication 1, dans lequel le corps (18) présente deux surfaces planes opposées (24) à partir desquelles les protubérances (20) font respectivement saillie.

3. Procédé selon la revendication 1 ou 2, dans lequel le corps (18) délimite une paroi continue.

4. Procédé selon l'une quelconque des revendications précédentes, dans lequel le corps (18) est plein.

5. Procédé selon l'une quelconque des revendications précédentes, dans lequel chaque protubérance (20) définit un sommet (26) opposé au corps (18) et délimitant une surface de collision (30) avec les autres éléments de support (3), le sommet (26) étant convexe vers l'extérieur de l'élément de support (3).

6. Procédé selon l'une quelconque des revendications précédentes, dans lequel chaque protubérance (20) comprend au moins une encoche de support (28) de biofilm.

7. Procédé selon la revendication 6, dans lequel chaque protubérance (20) comprend au moins trois encoches de support (28) parallèles de telle sorte que la protubérance (20) a une section en croix et/ou en étoile, chaque protubérance (20) comprenant de préférence quatre encoches (28) parallèles disposées à 90°.

8. Procédé selon l'une quelconque des revendications précédentes, dans lequel chaque protubérance (20) a une hauteur maximale par rapport au corps (18) comprise entre 0,6 mm et 4 mm, de préférence entre 1 mm et 3 mm, de préférence encore entre 1,5 mm et 2,5 mm.

9. Procédé selon l'une quelconque des revendications précédentes, dans lequel les protubérances (20) adjacentes sont espacées d'une distance comprise entre 0,4 mm et 9 mm, de préférence comprise entre 0,4 mm et 6 mm, de préférence encore comprise entre 0,4 mm et 3 mm.

10. Procédé selon l'une quelconque des revendications précédentes, dans lequel chaque protubérance (20) a une largeur maximale comprise entre 0,5 mm et 3 mm, de préférence entre 1 mm et 2 mm, de préférence encore entre 1 mm et 1,5 mm.

11. Procédé selon l'une quelconque des revendications précédentes, dans lequel les deux plus grandes dimensions du corps (18) sont supérieures ou égales à 3 fois la plus petite dimension du corps (18), de préférence supérieures ou égales à 4 fois la plus petite dimension.

12. Procédé selon l'une quelconque des revendications précédentes, dans lequel l'élément de support (3) a une largeur et une longueur inférieures ou égales à 1,5 cm, de préférence comprise entre 1,1 cm et 1,3 cm, de préférence encore environ égale à 1,25 cm.

13. Procédé selon l'une quelconque des revendications précédentes, dans lequel les éléments de support (3) ont une surface protégée (27) supérieure ou égale à 600 m²/m³ de volume d'éléments de support (3), de préférence encore supérieure ou égale à 800 m²/m³ de volume d'éléments de support (3), de préférence encore supérieure ou égale à 1 000 m²/m³ de volume d'éléments de support (3), de préférence encore supérieure ou égale à 1 200 m²/m³ de volume d'éléments de support (3), de préférence encore supérieure ou égale à 1 500 m²/m³ de volume d'éléments de support (3).

14. Réacteur de purification biologique de l'eau (2) délimitant un volume (5) de traitement de l'eau et comprenant :
- une entrée d'eau (6) ;
- une sortie d'eau (8) ;
- un filtre (4) d'occultation partielle de la sortie d'eau (8), le filtre (4) étant propre à permettre le passage de l'eau ;
- un système de mise en mouvement de l'eau à traiter (12) ; et
- un grand nombre d'éléments de support (3) pour la croissance d'un biofilm, propres à être maintenus dans l'eau et à l'intérieur du réacteur (2) par un dimensionnement adapté du filtre (4), l'élément de support (3) comprenant un corps (18) en forme générale de plaque, au moins l'un desdits éléments de support (3) comprenant une pluralité de protubérances (20) disjointes faisant saillie à partir du corps (18) , **caractérisé en ce que** le corps (18) présente une surface protégée (27) contre une collision avec les autres éléments de support (3), **en ce que** les protubérances (20) et le corps (18) définissent ensemble ladite surface protégée (27), et **en ce que** les protubérances (20) ont une largueur et un espacement adaptés pour empêcher la pénétration d'un autre élément de support (3).

15. Réacteur (2) selon la revendication 14, dans lequel les éléments de support (3) présentent les caractéristiques qui leur sont propres définies dans l'une quelconque des revendications 2 à 13.
